# EUROPÄISCHE PATENTSCHRIFT

(11) **EP 2 773 823 B1**
(45) Veröffentlichungstag und Bekanntmachung des Hinweises auf die Patenterteilung: **01.02.2017**
(21) Anmeldenummer: 12799135.4
(22) Anmeldetag: 05.12.2012
(51) Int. Cl.: E04F 19/00, E04F 13/08, E04F 15/02, F16B 5/00

(54) **VERRIEGELUNGSSYSTEM FÜR PANEELE UND PANEEL MIT VERRIEGELUNGSSYSTEM**
LOCKING SYSTEM FOR PANELS, AND PANEL WITH LOCKING SYSTEM
SYSTÈME DE VERROUILLAGE POUR PANNEAUX ET PANNEAU COMPORTANT UN SYSTÈME DE VERROUILLAGE

(30) Priorität: 06.12.2011 DE 202011108752 U
(43) Veröffentlichungstag der Anmeldung: 10.09.2014
(73) Patentinhaber: Akzenta Paneele + Profile GmbH, 56759 Kaisersesch (DE)
(72) Erfinder: HANNIG, Hans-Jürgen, 51427 Bergisch Gladbach (DE)
(74) Vertreter: Lippert, Stachow & Partner
(86) Internationale Anmeldenummer: PCT/EP2012/074508
(87) Internationale Veröffentlichungsnummer: WO 2013/083629

(56) Entgegenhaltungen:
- EP-A1- 2 415 944
- DE-A1-102005 002 297
- DE-A1-102009 038 750
- DE-U1- 20 304 761
- US-A1- 2010 083 603
- US-A1- 2011 173 914

## Beschreibung

Die Erfindung betrifft ein Verriegelungssystem gemäß dem Oberbegriff nach Anspruch 1.

In US 2011/173914 A1 wird ein gattungsgemäßes Verriegelungssystem mit Paneel und Sperrelement beschrieben, das im Übergang von erstem Federabschnitt und einen erstem Fußabschnitt an einem am Hakenabschnitt des Paneels vorgesehenen im Profil dornartigen Vorsprung gehalten wird.

Ferner offenbart die DE 10 2009 038 750 A1 ein gattungsgemäßes Verriegelungssystem mit Paneel und Sperrelement, das in einer am Hakenabschnitt des Paneels zusätzlich vorgesehenen Kammer angeordnet ist.

Auch aus der DE 10 2005 002 297 A1 ist ein gattungsgemäßes Verriegelungssystem mit Paneel und Sperrelement bekannt, das unter Verrastung in den Hakenabschnitt des Paneels eingesetzt wird.

DE 203 04 761 U1 und US 2010/0083603 A1 lehren jeweils ein Verriegelungssystem mit Paneel und Sperrelement, wobei das Sperrelement zwei senkrecht zur Fügerichtung beabstandete und in Fügerichtung federwirksame Federabschnitte aufweist, die in der Fügeposition jeweils an einem der zu verbindenden Paneelen verrastet sind.

Ein Verriegelungssystem ist aus der WO 00/47841 bekannt, gemäß der ein Sperrelement mit zwei endseitigen Federabschnitten vorgesehen ist, das die erste und zweite Hinterschneidung auskleidend in denselben eingepasst eingelegt ist.

In der WO 2007/008139A1 wird ein Verriegelungssystem beschrieben, bei dem das Sperrelement mit einem Verriegelungsabschnitt in die zweite Hinterschneidung unter Anlage an einer Wandung derselben eingelegt wird, wobei sein Fußabschnitt von einer Wandung der der ersten Hinterschneidung des ersten Hakenprofils abgehoben ist. Mit Absenken des zweiten Hakenprofils drückt dasselbe den Fußabschnitt gegen die Wandung der ersten Hinterschneidung, wodurch gleichzeitig der Verriegelungsabschnitt in die dritte Hinterschneidung hinein gehebelt wird.

Die WO 03/016654 offenbart ein Verriegelungssystem, bei dem das Verriegelungselement mit seinem Fußabschnitt in einer zusätzlichen Nut in Querrichtung eingesteckt und festgelegt ist.

Ein Verriegelungssystem ist aus EP 2415944 A1 bekannt, die alle Merkmale des Oberbegriffs des unabhängiges Anspruchs 1 offenbart.

Aufgabe der Erfindung ist, ein Verriegelungssystem der eingangs genannten Art bereitzustellen, das einfach aufgebaut ist und Paneelen in der Verbindungsposition zuverlässig verriegelt.

Die gestellte Aufgabe wird erfindungsgemäß durch die Merkmale des Anspruches 1 gelöst. Vorteilhafte Weiterbildungen werden in den Unteransprüchen beschrieben. Dabei ist der erste Fußabschnitt dem Nutgrund angepasst und liegt mit einer Anlagefläche flächig vorzugsweise über den gesamten Nutgrund an.

Vorgesehen ist somit ein Verriegelungssystem mit einem einfach ausgebildeten Sperrelement. Es hat den Vorteil, dass das Sperrelement gleich in eine Position eingesetzt werden kann, aus der es mit seinem ersten Federabschnitt ausgelenkt werden kann. Mittels des vorgesehenen Raums ist gewährleistet, dass die Auslenkung des Federabschnittes gegen eine Federkraft nicht behindert werden kann, so dass das Sperrelement mit seinem ersten Federabschnitt unter zumindest teilweiser Federentspannung in die dritte Hinterschneidung hinein eingreifen kann. Vorzugsweise ist das Sperrelement mit seinem ersten Federabschnitt beabstandet zu der die zweite Hinterschneidung begrenzende Wandung des ersten Hakenprofils so angeordnet und/oder dimensioniert, dass auch in seiner Offenposition des Sperrelementes in dem Raum ein erster Freiraum zur Aufnahme von Fremdpartikeln, wie Staub und Abrieb, verbleibt, die andernfalls einer präzisen vollständigen Fügebewegung bis zur Endposition der Paneelen im Weg sein würden.

Die Hakenprofile können übliche Hakenelemente mit überwiegend in Querrichtung weisende seitlichen Schrägen, einer die erste Hinterschneidung seitlich begrenzenden ersten Schräge und einer der ersten Schräge in Querrichtung gegenüberliegenden zweiten Schräge, aufweisen, an denen sie bei der Fügebewegung abgleiten können. Hierüber können sich die Kanten beider Paneelen gegeneinander ziehen und in Stoßflächen senkrecht zur Querrichtung so in einer Verbindungsebene gegeneinander gepresst werden, dass an der Oberseite der aneinander angrenzenden Paneelen keine Spaltbildung auftritt. Dies wird in der WO 03/016654 näher beschrieben, auf die in dieser Hinsicht Bezug genommen wird.

Das Sperrelement kann als vorzugsweise durchgehender Profilstrang ausgebildet sein. Vorzugsweise ist der Profilstrang seitlich offen. Der Profilstrang kann vorteilhaft einfach kanallos ausgebildet sein. Er kann somit ohne seitlich nach außen hin geschlossene Kanäle ausgebildet sein.

Das in die erste Hinterschneidung des ersten Hakenprofils eingelegte Sperrelement kann mit der Fügebewegung mit seinem ersten Federabschnitt unter elastischer Auslenkung desselben in die zweite Hinterschneidung des ersten Hakenprofils an der zweiten Schräge des zweiten Hakenprofils abgleiten und mit Erreichen der dritten Hinterschneidung des zweiten Hakenelementes unter formschlüssiger Verbindung der beiden Paneelen verriegelnd in die dritte Hinterschneidung hinein eingreifen. Vorzugsweise liegen zugeordnete zweite Hinterschneidung des ersten Hakenprofils und dritte Hinterschneidung des zweiten Hakenprofils in der Verbindungsposition in der Verbindungsebene einander gegenüber. Somit kann das Sperrelement unter Durchgriff durch die Verbindungsebene in die dritte Hinterschneidung eingreifen. Das Sperrelement kann unter leichter Federvorspannung an dem Hakenelement des zweiten Hakenprofils anliegen. Die zweite Schräge eines Hakenelementes kann, zumindest soweit ein Abgleiten des Sperrelementes an dieser zweiten Schräge vorgesehen ist, steiler als dessen erste Schräge angestellt sein, d.h. eine geringere Richtungskomponente in Querrichtung als dessen erste Schräge aufweisen. Damit kann der erste Federabschnitt vorteilhaft stärker ausgelenkt und vorgespannt werden. Es versteht sich, dass die Zusammenhänge allgemein und auch bei Vorsehen eines weiter unten beschriebenen zusätzlichen zweiten Federabschnittes unter zyklischer Vertauschung der adjektivisch verwendeten Ordnungszahlen erste und zweite gelten können.

Diese Ausbildung des Verriegelungssystems kann für alle zueinander komplementären Ränderpaaren des Paneels vorgesehen sein. Bei rechtwinkligen Paneelen können zwei Ränderpaare mit jeweils zwei zueinander komplementären Hakenprofilen vorgesehen sein. Die Fügebewegung kann in üblicher Weise mit Ansetzen eines neuen oberen Paneels an ein an bereits verlegtes, in einer Verlegeebene angeordnetes unteres Paneels mit zumindest mit einer Komponente senkrecht zur größeren Seitenfläche erfolgen. Hierbei kann das obere Paneel auf das untere Paneel senkrecht zu dessen größeren Seitenflächen abgesenkt werden, wobei das Sperrelement über seine gesamte Länge vorzugsweise gleichmäßig in seine Offenposition hinein ausgelenkt und in seine Verriegelungsposition hinein verriegelt. Die Fügebewegung kann auch dadurch erfolgen, das das obere Paneel an dem unteren Paneel verschwenkt wird. Hierzu kann das neue Paneel an das untere Paneel angesetzt und anschließend heruntergeklappt beziehungsweise herunterverschwenkt werden, bis es in der gemeinsamen Verlegeebene der Paneelen liegt und selbsttätig verriegelt. Das obere Paneel kann an der dem übrigen Bodenbelag abgewandten Ecke oder bevorzugt an dem zugewandten Hakenprofil des unteren Paneels schräg, d.h. in einem Winkel größer 0° und kleiner 90°, zu dessen größere Seitenfläche bzw. zur gemeinsamen Verlegeebene angesetzt und an dieser bzw. diesem als Schwenkpunkt in die Verlegeebene hinein verschwenkt werden. Hierbei kann das Sperrelement entsprechend dem Fortschritt in der Schwenkbewegung über seine Länge fortschreitend ausgelenkt werden und anfangs zumindest teilweise verriegeln. Das Verschwenken des oberen Paneels an dem unteren Paneel ist beispielsweise in DE 10 2005 062 361 A1 beschrieben, deren Offenbarungsgehalt bezüglich des dort beschriebenen Verschwenkvorganges mit in den dieser Anmeldung aufgenommen wird.

Vorzugsweise ist das erfindungsgemäße Verriegelungsprofil lediglich an zwei zueinander komplementären Hakenprofilen vorgesehen. Sind die Paneelen länglich mit längeren und kürzeren Rändern versehen, so ist das erfindungsgemäße Verriegelungssystem vorzugsweise an den kürzeren Rändern angeordnet sein. Die längeren Ränder können beispielsweise ein anderes bekanntes Verriegelungssystem oder ein übliches Nut-Feder-Profil aufweisen.

Vorzugsweise verbleibt in der Verriegelungsposition des Sperrelementes für Fremdpartikel ein zweiter Freiraum zwischen dem ersten Federabschnitt und der zweiten Schräge des Hakenelementes des zweiten Hakenprofils. Dieser zweite Freiraum kann sich in Richtung zum ersten Fußabschnitt hin keilförmig erweitern.

Vorzugsweise stützt sich der erste Fußabschnitt des Sperrelementes flächig in der ersten Hinterschneidung ab. Die Hakenprofile können jeweils eine die erste Hinterschneidung und die zweite Hinterschneidung enthaltende nutenartige Ausnehmung mit Nutgrund und Nutseitenwänden aufweisen. Die erste Nutseitenwand kann die erste Schräge ausbilden. Die eine als erste Nutseitenwand ausgebildete Nutseitenwand kann die erste Hinterschneidung und die andere als zweite Nutseitenwand ausgebildete Nutseitenwand kann die zweite Hinterschneidung begrenzen. Das Sperrelement kann sich mit seinem ersten Fußabschnitt an dem Nutgrund und den Nutseitenwänden der zugeordneten ersten Ausnehmung abstützen. Das Sperrelement kann in der Einlegeposition über seinen ersten Fußabschnitt unter Anlage an zumindest einer der Nutseitenwände und dem Nutgrund formschlüssig in der Ausnehmung angeordnet sein. Das Sperrelement kann zu seiner Lagefixierung in Einlegeposition unter vorzugsweise geringer Vorspannung zwischen den Nutseitenwänden eingeklemmt angeordnet sein.

Anlagefläche und Nutgrund können ein kongruentes Profil aufweisen. Der erste Fußabschnitt des Sperrelements kann gerade, d.h. ungekrümmt oder ungebogen, ausgebildet sein. Der Nutgrund kann zumindest in etwa parallel zu den größeren Seitenflächen verlaufend angeordnet sein. Somit kann die Verrastung des Sperrelementes in die dritte Hinterschneidung hinein ohne Verformung des ersten Fußabschnittes erfolgen.

In Anpassung an das zweite Hakenprofil kann der erste Fußabschnitt in einem ersten Winkel größer 90° zum ersten Federabschnitt abgewinkelt sein. Der Nutgrund kann zumindest in etwa parallel zu den größeren Seitenflächen verlaufen. Der erste Fußabschnitt kann in Anpassung an die zweite Schräge des Hakenelementes des zweiten Hakenprofils in einem ersten Winkel größer 90° zum ersten Federabschnitt abgewinkelt sein. Der erste Winkel ist vorzugsweise kleiner als die Anstellung der zweiten Schräge des zweiten Hakenprofils. Die zweite Nutseitenwand und der Nutgrund können einen zweiten Winkel einschließen, der vorzugsweise etwas größer, vorzugsweise bis 20° größer als der erste Winkel zwischen erstem Fußabschnitt und erstem Federabschnitt des Sperrelementes ist. Damit kann der Raum für das Verschwenken des ersten Federabschnittes bereitgestellt werden.

Vorzugsweise stützt sich der Hakenvorsprung des zweiten Hakenprofils in der Verbindungsposition über das Sperrelement an der ersten Ausnehmung ab. Damit kann an dieser Stelle eine Kraftübertragung senkrecht zu den größeren Seitenflächen zwischen den Hakenprofilen erfolgen.

In einer bevorzugten Ausbildungsform kann das Sperrelement einen in Querrichtung zum ersten Federabschnitt beabstandeten zweiten Federabschnitt aufweisen. Das freie Ende des ersten Federabschnittes kann in eine Richtung weisen, die zumindest in etwa entgegengesetzt zu der Richtung ist, in die das freies Ende des zweiten Federabschnittes weist. Der zweite Federabschnitt kann zur Ausbildung einer weiteren Verriegelung zwischen den komplementären Hakenprofilen, vorzugsweise gleichzeitig mit dem Auslenken des ersten Federabschnitts, unter Abgleitung an der zweiten Schräge des ersten Hakenprofils in eine an dem zweiten Hakenprofil vorgesehene zweite Hinterschneidung elastisch in die Offenposition ausgelenkt werden. Mit Erreichen der Verbindungsposition der beiden Paneelen kann der zweite Federabschnitt kraftmechanisch günstig vorzugsweise in einer der ersten Verriegelungsbewegung zumindest in etwa entgegen gesetzten zweiten Verriegelungsbewegung federnd automatisch aus der Offenposition in die Verriegelungsposition hinein in eine an dem einen Hakenelement des ersten Hakenprofils vorgesehene dritte Hinterschneidung formschlüssig eingreifen. Das freie Ende des zweiten Federabschnittes kann in der Verriegelungsposition zumindest etwa in Fügebewegung weisen.

Die Beabstandung der Federabschnitte kann über einen Quersteg, beispielsweise über den ersten Fußsteg, erfolgen. Der Quersteg kann zumindest etwa so schräg zu den größeren Seitenflächen verlaufend angeordnet sein, dass die beiden Federabschnitte in der Verriegelungsposition bezüglich einer Paneelstärke zumindest etwa in gleicher Höhe angeordnet sind.

Das Sperrelement kann, unmittelbar an den ersten Fußabschnitt endseitig anschließend, einen weiteren Abschnitt abweisen. Dieser kann zu dem ersten Fußabschnitt in einem dritten Winkel größer 90° abgewinkelt und zum ersten Federabschnitt in Querrichtung beabstandet angeordnet sein. Der Abschnitt kann mit dem ersten Federabschnitt einen spitzen Winkel einschließen. Beide können keilartig auseinander laufend angeordnet sein können. Vorzugsweise sind erster Federabschnitt und Abschnitt bezüglich der Paneelstärke zumindest in etwa gleicher Höhe angeordnet. Das Sperrelement kann mit den drei Abschnitten, dem ersten Federabschnitt, dem ersten Fußsteg und dem Abschnitt, einen U-förmigen Querschnitt mit dem ersten Fußabschnitt als Quersteg und dem ersten Federabschnitt und dem Abschnitt jeweils als sich endseitig vom Quersteg erstreckender Schenkel ausgebildet sein. Das Sperrelement kann in der Verriegelungsposition den Hakenvorsprung des zweiten Hakenprofils von drei Seiten her umschließen. Das Sperrelement kann in der Verriegelungsposition mit dem ersten Fußabschnitt und dem Abschnitt formschlüssig an dem Hakenvorsprung des zweiten Hakenprofils und des ersten Hakenvorsprunges anliegen. Damit kann an diesen Stellen eine Kraftübertragung über das Sperrelement in Querrichtung bzw. in Richtung der Fügebewegung erfolgen. Vorzugsweise sind der erste Fußabschnitt und der Abschnitt in Einlegeposition formschlüssig in der ersten Hinterschneidung angeordnet. Das Sperrelement kann in Einlegeposition mit dem Abschnitt an der die erste Hinterschneidung begrenzenden ersten Nutseitenwand anliegen. Vorzugsweise ist der dritte Winkel im unbelasteten Zustand des Sperrelementes etwas größer als der Winkel, den der Nutgrund und die zweite Nutseitenwand bzw. die erste Schräge einschließen. Damit kann das Sperrelement mit Einlegen in die erste Ausnehmung an dieser Stelle kaum merklich elastisch gebogen und damit elastisch vorgespannt werden. All diese Maßnahmen können insgesamt eine verbesserte Lagefixierung des Sperrelementes in der ersten Hinterschneidung des ersten Hakenprofils bewirken.

Weist der Abschnitt ein freies Ende auf, so kann sich der Querschnitt an diesem freien Ende vorzugsweise keilstumpfartig unter Ausbildung einer schiefen Ebene verjüngen, um ein leichteres Ineinandergreifen der Hakenelemente zu ermöglichen, indem das Hakenelement des zweiten Hakenprofils mit seiner ersten Schräge an dieser schiefen Ebene angreift.

Das Sperrelement des Verriegelungssystems kann einen an den Abschnitt anschließenden zweiten Fußabschnitt aufweisen, der kraftmechanisch günstig zumindest etwa parallel beabstandet zu dem ersten Fußabschnitt oder in der Verriegelungsposition zu den größeren Seitenflächen angeordnet ist. Damit kann eine weiter verbesserte Lagefixierung des Sperrelementes in der ersten Ausnehmung in einer Einlegposition erzielt werden. Ferner können die Hakenprofile in der Verbindungsposition kraftmechanisch günstig entweder über den ersten oder den zweiten Fußabschnitt Kraft übertragend aneinander anliegen. Damit können an dem jeweils unbelasteten Fußabschnitt und zwar zwischen dem Hakenelement und diesem Fußabschnitt und/oder zwischen diesem Fußabschnitt und der Wandung der ersten Hinterschneidung jeweils ein dritter Freiraum beispielsweise zur Aufnahme von Fremdpartikeln und/oder zum Ausgleich von Passungenauigkeiten bereitgestellt werden.

Vorzugsweise sind die Federabschnitte und Abschnitt bezüglich der Paneelstärke zumindest in etwa gleicher Höhe angeordnet. Das Sperrelement kann in Einsetzlage den Hakenvorsprung des ersten Hakenprofils von drei Seiten her umgeben und somit noch besser an dem ersten Hakenprofil lagefixiert sein. Das Sperrelement kann mit den beiden Federabschnitten, den beiden Fußabschnitten und dem mittleren Abschnitt eine kantige S-Profilform mit vorzugsweise abgerundeten Kanten aufweisen. Diese S-Profilform kann mittig den Abschnitt und, hiervon jeweils endseitig ausgehend, jeweils einen Fußabschnitt mit dort endseitig angeschlossenem Federabschnitt aufweisen. Somit kann das Sperrelement bezüglich einer mittig in dem Abschnitt angeordneten Mittellängsachse als Spiegelsymmetrieachse zumindest in etwa achsensymmetrisch ausgebildet sein.

In Vereinfachung der Herstellung können, hinsichtlich der geometrischen Beziehungen, insbesondere der Winkelbeziehungen zueinander und zur ersten Hinterscheidung des zweiten Hakenelementes, der zweite Federabschnitt und/oder der zweite Fußabschnitt gleich dem ersten Federabschnitt bzw. dem ersten Fußabschnitt ausgebildet und ferner relativ zueinander sowie zu dem Abschnitt angeordnet sein.

Ähnlich wie beim ersten Federabschnitt kann bei dem zweiten Federabschnitt beidseitig in Querrichtung jeweils ein hier als vierter Freiraum bezeichneter Freiraum für die Fremdpartikel und zum Ausgleich für Maßungenauigkeiten vorgesehen sein. Diese vierten Freiräume können mit den dritten Freiräumen verbunden sein.

Der erste Federabschnitt und/oder der zweite Federabschnitt können jeweils ein hakenartiges freies Ende mit einem seitlich vorkragenden Vorsprung aufweisen, mit dem das Sperrelement in Verriegelungsposition zur formschlüssigen Verbindung der Paneelen in der jeweils zugeordneten zweiten und dritten Hinterschneidung formschlüssig anliegt. Hierbei kann das hakenartige Ende unterseitig seines seitlich vorkragenden Vorsprungs Kraft übertragungswirksam an einem vorzugsweise zu den größeren Seitenflächen parallelen Wandbereich der dritten Hinterschneidung anliegen. Es kann ferner unter Ausbildung eines Formschlusses senkrecht zu den größeren Seitenflächen mit einem stirnseitigen Bereich an einem vorzugsweise zu den größeren Seitenflächen parallelen Wandbereich der zweiten Hinterschneidung anliegen.

Das hakenartige freie Ende kann an seinem vorzugsweise keilartig zulaufenden Vorsprung eine kraftmechanisch günstige Rampe aufweisen, an der das jeweils zugeordnete Hakenelement bei der Fügebewegung unter Auslenkung des Federabschnittes in die Offenposition hinein abgleitet. Zwischen der vorzugsweise abgerundeten keilartigen Spitze des Vorsprunges und der Wandung der dritten Ausnehmung kann in der Verriegelungsposition ein fünfter Freiraum für Fremdpartikel und/oder zum Ausgleich von Passungenauigkeiten vorgesehen sein.

In Vereinfachung der Sperrelementes können zumindest einige oder vorzugsweise alle Abschnitte des mechanisch unbelasteten Sperrelementes ungekrümmt bzw. ungebogen, d.h. gerade oder gestreckt, mit vorzugsweise gerundeten Übergängen zwischen den Abschnitten ausgebildet sein. Die oben angegebenen ersten, zweiten und dritten Winkel des Sperrelementes beziehen sich vorzugsweise auf den Querschnitt des profilartigen Sperrelementes.

Das Sperrelement kann einstückig ausgebildet sein. Vorzugsweise kann das Sperrelement aus einem vorzugsweise aus Kunststoff hergestelltem Extrudat abgelängt sein.

Die vorliegende Erfindung wird im Folgenden anhand mehrer in einer Zeichnung dargestellter Ausführungsformen des Verriegelungssystems näher erläutert. In der Zeichnung zeigen:
- Fig. 1: eine Querschnittsansicht einer ersten Ausführungsform eines Verriegelungssystems mit zwei mittels zueinander komplementärer Hakenprofile und einem Sperrelement in einer Verbindungsposition verriegelten Paneelen,
- Fig. 2: eine Querschnittsansicht einer zweiten Ausführungsform des Verriegelungssystems mit einem gegenüber Figur 1 anders angeordnetem Sperrelement,
- Fig. 3: eine Querschnittsansicht einer dritten Ausführungsform des Verriegelungssystems mit einem gegenüber den Figuren 1 und 2 erweiterten Sperrelement,
- Fig. 4: eine Querschnittsansicht einer vierten Ausführungsform des Verriegelungssystems mit einem gegenüber Figur 3 erweiterten Sperrelement und
- Fig. 5: eine Querschnittsansicht einer vierten Ausführungsform des Verriegelungssystems mit einem gegenüber Figur 4 erweiterten Sperrelement.

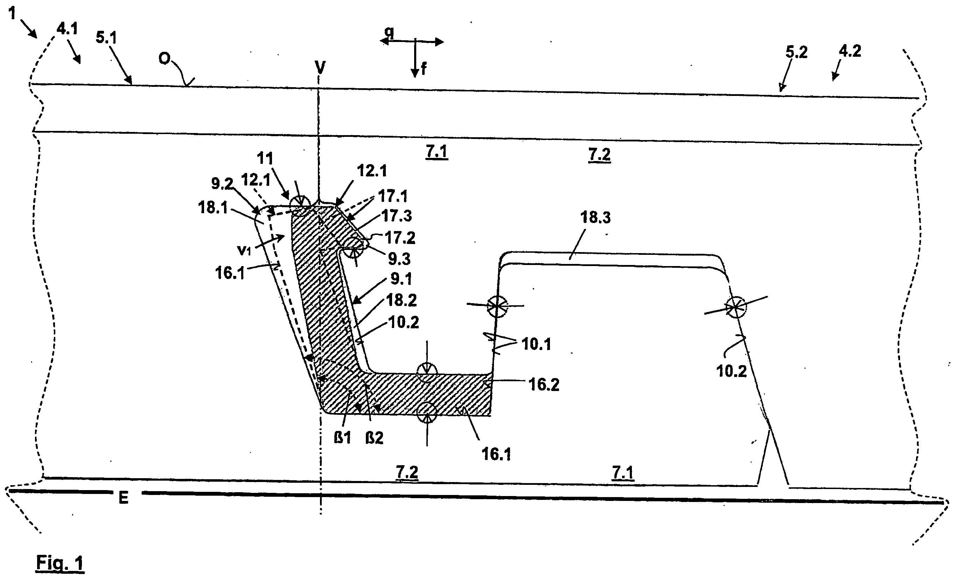

In den Figuren 1 bis 5 wird jeweils eine Querschnittsansicht einer Ausführungsform eines Verriegelungssystems 1 für jeweils zwei größere Seitenflächen 2 und Ränder 3 aufweisende plattenförmige Paneelen 4.1, 4.2 gezeigt. Diese sind jeweils zur Verbindung gleichartiger Paneelen 4.1, 4.2 zu einem hier nicht weiter dargestelltem Fußboden-, Wand- oder Deckenbelag wenigstens an zwei sich gegenüberliegenden Rändern 3 mit zueinander komplementäre Hakenprofile, einem ersten Hakenprofil 5.1 und einem zweiten Hakenprofil 5.2, versehen.

Die Hakenprofile 5.1, 5.2 weisen jeweils ein Hakenelement 6 mit Hakenhals 7.1 und endseitigem seitlichem Hakenvorsprung 7.2 auf, die eine Ausnehmung 8 mit einer in einer Querrichtung q wirksamen ersten Hinterschneidung 9.1 und einer senkrecht zu den größeren Seitenflächen 2 wirksame zweite Hinterschneidung 9.2 begrenzen. Die Querrichtung q weist senkrecht zur Längsrichtung der gegenüberliegenden Rändern 3 und zu den größeren Seitenflächen 2, wobei die Längsrichtung in allen Figuren 1 bis 5 senkrecht zur Zeichenebene ist. Die Hakenelemente 6 sind in einer Fügebewegung f jeweils unter Eingriff ihres Hakenvorsprungs 7.2 in die erste Hinterschneidung 9.1 des jeweils anderen Hakenelementes 6 in eine in den Figuren 1 bis 5 gezeigten Verbindungsposition hinein eingreifend verhakt. In den Figuren 1 bis 5 sind jeweils die ineinander greifen Hakenprofile 5.1, 5.2 zweier auf einer Basis B angeordneter gleichartiger Paneelen, ein unteres Paneel 4.1 und ein oberes Paneel 4.2, in der Verbindungsposition gezeigt.

An dem Hakenvorsprung 7.2 der Hakenelemente 6 ist eine die erste Hinterschneidung 9.1 begrenzende erste Schräge 10.1 und eine dieser gegenüber liegende zweite Schräge 10.2 vorgesehen. Die Hakenprofile 5.1, 5.2 gleiten bei der Fügebewegung f an den ersten Schrägen aneinander ab, wodurch die Paneelen 4.1, 4.2 in Querrichtung q gegeneinander geführt werden. Die Fügebewegung b erfolgt bei den hier gezeigten Beispielen so, dass das obere Paneel 4.2 an dem zugewandten ersten Hakenprofil 5.1 des unteren Paneels 4.1 schräg zu dessen größere Seitenfläche 2 angesetzt und an diesem als Schwenkpunkt in eine Verlegeebene E hinein verschwenkt wird, die hier senkrecht zur Zeichnebene ist. Dieses Verbindungsverfahren ist detaillierter in der in DE 10 2005 062 361 beschrieben, auf die hier in diesem Zusammenhang verwiesen wird.

Ferner ist ein einstückiges Sperrelement 11 mit zumindest einem ersten Federabschnitt 12.1 und einem ersten Fußabschnitt 13.1 vorgesehen, das in der Verbindungsposition zwischen den Hakenprofilen 5.1, 5.2 angeordnet ist. Es ist, was hier nicht explizit gezeigt ist, vor der Fügebewegung b in eine Einlegeposition bei den Ausführungsformen gemäß den Figuren 1, 3 bis 5 in die erste Hinterschneidung 9.1 des ersten Hakenprofils 5.1 des unteren Paneels 4.1 und bei der gemäß Figur 2 in die erste Hinterschneidung 9.1 des zweiten Hakenprofils 5.1 des oberen Paneels 4.2 so eingelegt, dass es mit seinem ersten Fußabschnitt in der ersten Hinterschneidung flächig anliegt. Das Sperrelement 11 ist aus einem extrudierten Kunststoffprofil auf die Länge der zugeordneten Hakenprofile 5.1, 5.2 abgelängt. In den Figuren 1 bis 5 ist jeweils eine Querschnittsansicht gezeigt, in der alle Teile geschnitten sind, so dass die Ränder 3 senkrecht zur Zeichenebene angeordnet sind. Lediglich das Sperrelement ist als geschnitten dargestellt, um es hervorzuheben.

Die zweite Hinterschneidung 9.2 weist einen von dem Sperrelement 10 in der in der Zeichnung gezeigten Verriegelungsposition und dem ersten Hakenprofil 5.1 begrenzten Raum 14. Ferner ist eine dritte Hinterschneidung 9.3 in dem zweiten Hakenprofil 5.2 bzw. ersten Hakenprofil 5.1 vorgesehen, die in Verbindungsposition der beiden Paneelen 4.1, 4.2 der zweiten Hinterschneidung 9.2 des ersten Hakenprofils 5.1 bzw. zweiten Hakenprofils 5.2 gegenüberliegt.

In ordnungsgemäßer Verbindungsposition liegen die Paneelen 4.1, 4.2 in einer Verbindungsebene V senkrecht zur Querrichtung q über Stoßflächen 15 ohne Spaltbildung aneinander an, wobei die Stoßflächen 15 jeweils in eine als Oberseite O ausgebildete größere Seitenfläche 2 einmünden. Die Stoßflächen 15 werden in den Ausführungsformen gemäß Figuren 1 und 3 bis 5 in Fügebewegung f hinten von der zweiten Hinterschneidung 9.2 des unteren Paneels 4.1 bzw. von der dritten Hinterschneidung 9.3 des oberen Paneels 4.2 begrenzt.

Mit der Fügebewegung b wird der erste Federabschnitt 12.1 des Sperrelements 10 unter Aufbau einer Federkraft in den Raum 14 in eine Offenposition hinein ausgelenkt, indem es mit einem freien Ende 16 seines ersten Federabschnittes 12.1 an der zweiten Schräge 10.2 des jeweils anderen Hakenprofils 4.2, 4.1, d.h. in das es nicht eingelegt ist, abgleitet. In Fügebewegung f vorn und die zweite Schräge 10.2 begrenzend, ist die diesem Sperrelement 11 zugeordnete dritte Hinterschneidung 9.3 in Querrichtung q in den Hakenvorsprung 7.2 eingebracht. In Figur 1 ist der erste Federabschnitt 12.1 mit gestrichelten Umrisslinien in seiner Offenposition dargestellt, in der er kurz vor Erreichen der Verbindungsposition der beiden Paneelen 4.1, 4.2 die die zweite Schräge 10.2 begrenzende dritte Hinterschneidung 9.2 erreicht hat. Mit Erreichen der Verbindungsposition der beiden Paneelen 4.1, 4.2 entspannt sich das Sperrelement 10 mit seinem ersten Federabschnitt 12.1 automatisch unter formschlüssiger Verriegelung der beiden Paneelen 4.1, 4.2 aus der Offenposition in die dritte Hinterschneidung 9.2 in einer ersten Verriegelungsbewegung v₁ in eine Verriegelungsposition so hinein, dass es in der Verriegelungsposition unter Vorspannung an dem jeweils anderen Hakenprofils 4.2, 4.1 anliegt.

Die Ausnehmungen 8 der Hakenprofile 5.1, 5.2 sind jeweils nutenartig mit Nutgrund 16.1 und Nutseitenwänden, einer die erste Hinterschneidung 9.1 begrenzende erste Nutseitenwand 15.2 sowie eine die zweite Hinterschneidung 9.2 und den Raum 14 begrenzende zweite Nutseitenwand 15.3 ausgebildet. Der Nutgrund 15.1 ist eben und parallel zur Oberseite O angeordnet. Das Sperrelement 11 stützt sich in Einsetzlage mit seinem ersten Fußabschnitt 13.1 flächig an dem Nutgrund 15.1 und an den Nutseitenwänden 16.2, 16.3 der Ausnehmung 8 ab. Erster Fußabschnitt 13.1 und erster Federabschnitt 12.1 des Sperrelementes 11 schließen einen ersten Winkel ß1 größer 90° ein. Der Nutgrund 16.1 erstreckt sich in Querrichtung q bis zur Verbindungsebene V. In der Verbindungsebene V geht die erste Hinterschneidung 9.1 in die zweite Hinterschneidung 9.2 über. Die zweite Nutseitenwand 16.3 und der Nutgrund 16.1 schließen einen zweiten Winkel ß2 ein, der größer als der erste Winkel ß1 ist.

Der erste Federabschnitt 12.1 weist ein hakenartiges freies Ende 17 mit einem seitlichen Vorsprung 17.1 auf, der seitlich keilartig zu einer abgerundeten Spitze 17.1 zusammenläuft und eine Rampe 17.3 aufweist. An dieser Rampe 17.3 gleitet der Hakenvorsprung 7.2 des Hakenprofils 5.2, in dem das Sperrelement 11 nicht eingelegt ist, mit seiner zweiten Schräge 10.2 unter Auslenkung des Federabschnittes 13 in seine Offenposition hinein ab. Erreicht der seitliche Vorsprung 17.1 die die zweite Schräge 10.2 begrenzende dritte Hinterschneidung 9.3 des jeweils anderen Hakenprofils 5.2, so entspannt der erste Federabschnitt 12.1 unter formschlüssiger Verriegelung der beiden Hakenprofile 5.1, 5.2 in eine Verriegelungsposition hinein in die dritte Hinterschneidung 9.3. In der Verriegelungsposition liegt das Sperrelement 10 in Verriegelungsbewegung b vorn innerhalb der zweiten Hinterschneidung des gegen erste Verriegelungsbewegung v₁ formschlüssig und in erster Verriegelungsrichtung v₁ hinten innerhalb der dritten Hinterschneidung 9.3 in Verriegelungsbewegung b formschlüssig an. Die ungefähre Position dieser Formschlüsse ist durch gepunktete Kreise angedeutet, wobei der Formschluss jeweils über die gesamte Erstreckung der aneinander anliegenden Flächen erfolgt.

Zur Vermeidung einer relativen Verschiebung der Paneele 4.1, 4.2 in der Verbindungsposition in Fügebewegung f besteht ein weiterer Formschluss am ersten Fußabschnitt 13.1, der in Verbindungsposition oberseitig gegen Fügebewegung f an dem Hakenvorsprung 7.2 des zweiten Hakenprofils 5.2 bzw. in Verbindungsrichtung an dem Hakenvorsprung und in Fügebewegung f bodenseitig an der ersten Hinterschneidung 9.1 anliegt.

Der von dem ersten Federabschnitt 12.1 begrenzte Raum 14 ist so bemessen, dass auch in der Offenposition des ersten Federabschnittes 12.1 ein erster Freiraum 18.1 zur Aufnahme von Abrieb und/oder Staubpartikeln verbleibt (Figur 1). In Vergrößerung des ersten Freiraumes 18.1 ist das Ende 17 des ersten Federabschnittes 12.1 von der zweiten Nutseitenwand 16.3 weg abgewinkelt. Ebenfalls ist zwischen dem ersten Federabschnitt 12.1 und der zweiten Schräge 10.2 des jeweils anderen Hakenelementes 6 ein zweiter Freiraum 18.2 zur Aufnahme von Abrieb und/oder Staubpartikeln vorgesehen. In allen dargestellten Ausführungsformen des Verriegelungssystems 1 werden über den jeweils anderen Hakenvorsprung 7.2 und die jeweils andere erste Hinterschneidung 9.1 in und gegen Fügebewegung f keine Kräfte übertragen. Gegenteilig ist zwischen ihnen ein dritter Freiraum 18.3 zur Aufnahme von Abrieb und/oder Staubpartikeln vorgesehen.

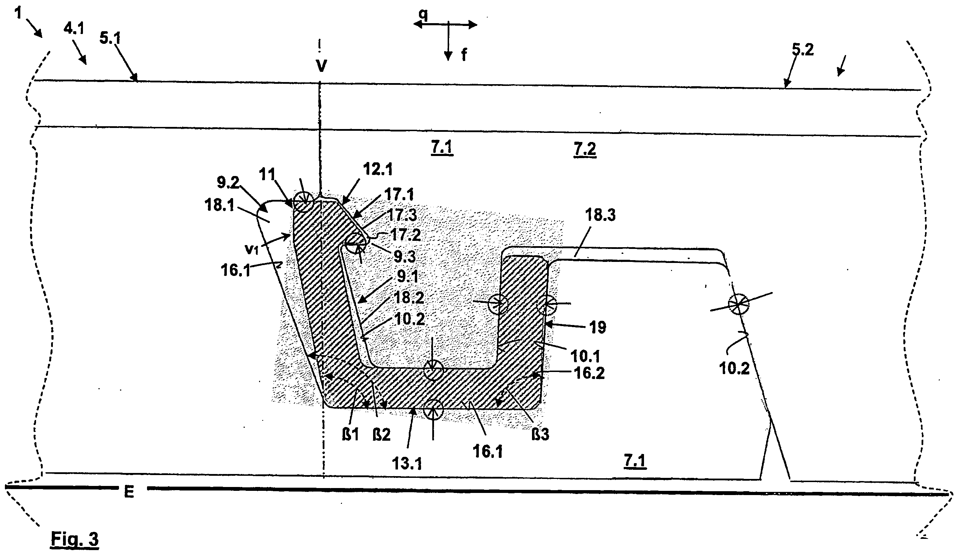

In der zweiten Ausführungsform des Verriegelungssystems 1 gemäß Figur 2 ist das Sperrelement 11 um eine Spiegelebene parallel zur Oberseite O gespiegelt angeordnet, wobei es vor Fügebewegung f in dem oberen Paneel 4.2 eingelegt ist. Es weist mit seinem freien Ende 17 in Fügebewegung f. Entsprechend der Spiegelung ist das hier linke Paneel als oberes Paneel 4.1 und das hier rechte Paneel als unteres Paneel 4.1 angeordnet. Daher ist der Ablauf bei der Fügebewegung f gleich wie bei der ersten Ausführungsform des Verriegelungssystems, indem es unter endseitigem Abgleiten an der zweiten Schräge 10.2 hier des unteren Paneels 4.1 in den Raum 14 ausgelenkt wird und mit Erreichen der Verbindungsposition der Paneelen 4.1, 4.2 formschlüssig verriegelnd in die dritte Hinterschneidung 9.3 verrastet. Diese gespiegelte Anordnung des Sperrelementes ist auch bei den weiteren Ausführungsformen des Verriegelungssystems möglich, jedoch hier nicht explizit gezeigt, aber aus den Figuren 3 bis 5 durch Spieglung jeweils leicht ableitbar.

In den Ausführungsformen des Verriegelungssystems 1 gemäß den Figuren 3 bis 5 weist das Sperrelement 11 in Anschluss an seinen ersten Fußabschnitt 13.1 einen zu demselben abgewinkelten und zum ersten Federabschnitt 12.1 in Querrichtung q beabstandeten Abschnitt 19 auf. Der Abschnitt 19 ist in der Verriegelungsposition bezüglich der Querrichtung q formschlüssig zwischen den Hakenvorsprüngen 7.2 der beiden Hakenprofile 5.1, 5.2 angeordnet ist. Der Abschnitt 19 schließt mit dem ersten Fußabschnitt 13.1 einen dritten Winkel ß3 größer 90° ein. Mittels des zusätzlichen Abschnittes 19 kann das Sperrelement 11 fester in der ersten Hinterschneidung 9.1 gehalten werden. Über den Abschnitt werden, wie in Figur 3 durch gepunktete Kreise angedeutet, Kräfte in Querrichtung q übertragen. In der dritten Ausführungsform des Verriegelungssystems 1 gemäß Figur 3 weist der Abschnitt 19 endseitig eine schiefe Ebene 20 auf, an der während der Fügebewegung f abgleitend der Hakenvorsprung 7.2 des zweiten Hakenprofils 5.2 leichter in die Ausnehmung 8 des ersten Hakenprofils 5.1 hinein geführt werden kann.

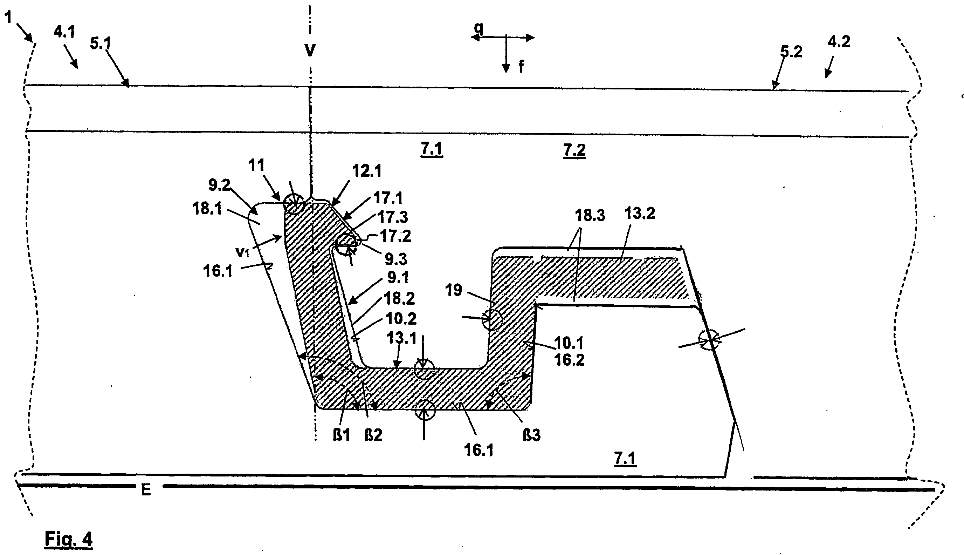

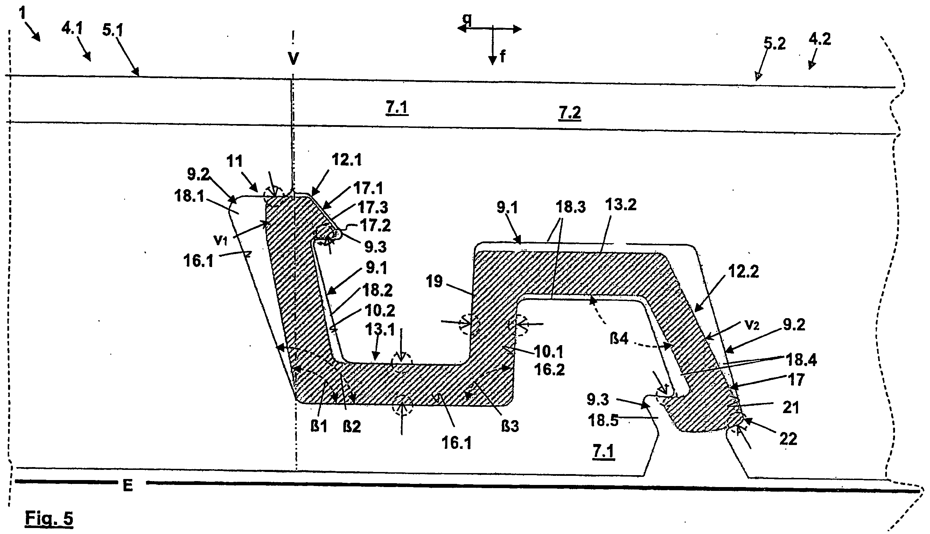

In der vierten und fünften Ausführungsform des Verriegelungssystems 1 gemäß den Figuren 4 bzw. 5 ist jeweils ein zweiter Fußabschnitt 13.2 vorgesehen, der sich in Einsetzlage des Sperrelementes 11 endseitig von dem den Abschnitt 19 parallel zur Oberseite O erstreckt. Damit weist das Sperrelement 11 einen U-förmigen Querschnitt mit dem ersten Federabschnitt 12.1, dem Abschnitt 19 als Schenkel und dem ersten Fußsteg 13.1 als Quersteg auf. Der zweite Fußabschnitt 13.2 ist in Fügebewegung f beabstandet zu den Hakenprofilen 5.1, 5.2 angeordnet, so dass oberhalb und unterhalb des zweiten Fußabschnittes 13.2 ein dritter Freiraum 18.3 angeordnet ist. Somit sind der benachbarte Hakenvorsprung 7.2 und die erste Hinterschneidung sicher voneinander und von dem Sperrelement 11 beabstandet, so dass eine Berührung dieser und damit eine eventuelle Verschiebung in an den Stoßflächen 15 angrenzenden Paneelen unter Ausbildung eines Sprunges in Fügebewegung verhindert werden kann. Ferner Damit können eventuelle Passungenauigkeiten des Sperrelementes 11 gegenüber den Paneelen 4.1, 4.2 ausgeglichen werden.

Das Sperrelement 11 der fünften Ausführungsform des Verriegelungssystems 1 gemäß den Figur 5 weist das Sperrelement 11 einen zweiten Federabschnitt 12.2 auf, der in Querrichtung q beabstandet zum ersten Federabschnitt 12.1 angeordnet ist. Der zweite Federabschnitt 12,2 erstreckt sich mit seinem freien Ende 17 in Fügebewegung f. Sein freies Ende 17 ist gleich dem freien Ende 17 des ersten Federabschnittes 12.1 hakenartig, d.h. keilartig zu einer seitlichen Spitze 17.1 zusammenlaufend und mit einer schiefen Ebene 17.2 versehen, ausgebildet. Wie der Figur 5 entnehmbar, ist der zweite Federabschnitt 12.2 achsensymmetrisch bezüglich einer Symmetrieachse s um etwa 180° gedreht zum ersten Federabschnitt 12.1 angeordnet. Es verriegelt entsprechend in einer zweiten Verriegelungsbewegung v₂ entgegengesetzt zur ersten Verriegelungsbewegung v₁ in die am Hakenelement 6 des unteren Paneels 4.1. Die formschlüssige Anlage des hakenförmigen Endes 17 ist auch hier durch gepunktete Kreise gekennzeichnet. Deutlich wird, dass hierdurch eine zweite formschlüssige Rastverbindung erzeugt wird, mittels derer die beiden Hakenprofile 5.1, 5.2 verbunden werden.

Der zweite Federabschnitt 12.2 wird mit der Fügebewegung f unter Abgleiten seiner gerundeten Spitze 17.1 an der zweiten Schräge 10.2 des unteren Paneels 4.1 in seine Offenposition federelastisch ausgelenkt und schwingt automatisch mit Erreichen der Verbindungsposition der Paneelen 4.1, 4.2 in die dritte Hinterschneidung 9.3 des unteren Paneels 4.1. Dies erfolgt gleichzeitig mit der Auslenkung und Verrastung des ersten Federabschnittes 12.1 in die ihm zugeordnete dritte Hinterschneidung 9.3 hinein.

Der zweite Federabschnitt 12.2 schließt mit dem zweiten Fußabschnitt 13.2 einen vierten Winkel ß4 auf, der größer als der erste Winkel zwischen dem ersten Federabschnitt und dem ersten Fußabschnitt ist. Das hakenförmige Ende 17 des zweiten Federabschnitts 13.1 wird an einer seiner Spitze 17.1 abgewandten Seite 21 so gegen die die zweite Hinterschneidung 9.2 begrenzende Seitenfläche 22 gegen gehalten, dass das Ende 17 unter Vorspannung in der dritten Hinterschneidung 9.3 anliegt. An der Stelle, an der das Ende an der Seitenfläche 21 der zweiten Hinterschneidung 9.2 anliegt, weist die Seitenfläche 21 eine Stufe 22 auf, in die hinein sich der zweite Federabschnitt 12.2 abstützt. Damit ist der zweite Federabschnitt 12.2 dort mit einer Kraftkomponente gegen Fügebewegung f und mit einer Kraftkomponente in Querrichtung q zu dem ersten Federabschnitt 12.1 sowie in die dritte Hinterschneidung hinein gegengelagert. Damit wird das Sperrelement 11 in der Verriegelungsposition zwischen den Hakenprofilen 5.1, 5.2 verspannt. All diese Maßnahmen festigen die Verriegelung des Sperrelementes an den Paneelen 4.1, 4.2.

Die angegebenen Winkel ß1 bis ß4 beziehen sich auf die in den Figuren gezeigten Querschnittsdarstellungen des Sperrelementes.

Die beiden dritten Freiräume 18.3 oberhalb und unterhalb des zweiten Fußabschnittes 13.2 werden um vierte Freiräume 18.4 beidseitig des zweiten Federabschnittes 12.2 erweitert. Zwischen dem Vorsprung 17.1, insbesondere im Bereich dessen Spitze 17.3, und der die dritte Hinterschneidung 9.3 begrenzenden Wandung ist ein fünfter Freiraum 18.5 für die Fremdpartikel vorgesehen.

### Bezugszeichenliste

- 1: Verriegelungssystem
- 2: Seitenfläche
- 3: Rand
- 4.1: unteres Paneel
- 4.2: oberes Paneel
- 5.1: erstes Hakenprofil
- 5.2: zweites Hakenprofil
- 6: Hakenelement
- 7.1: Hakenhals
- 7.2: Hakenvorsprung
- 8: Ausnehmung
- 9.1: erste Hinterschneidung
- 9.2: zweite Hinterschneidung
- 9.3: dritte Hinterschneidung
- 10.1: erste Schräge
- 10.2: zweite Schräge
- 11: Sperrelement
- 12.1: erster Federabschnitt
- 12.2: zweiter Federabschnitt
- 13.1: erster Fußabschnitt
- 13.2: zweiter Fußabschnitt
- 14: Raum
- 15: Stoßfläche
- 16.1: Nutgrund
- 16.2: erste Nutseitenwand
- 16.3: zweite Nutseitenwand
- 17: Ende
- 17.1: Vorsprung
- 17.2: Spitze
- 17.3: Rampe
- 18.1: erster Freiraum
- 18.2: zweiter Freiraum
- 18.3: dritter Freiraum
- 18.4: vierter Freiraum
- 18.5: fünfter Freiraum
- 18.6: sechster Freiraum
- 19: Abschnitt
- 20: Ebene
- 21: Seitenfläche
- 22: Stufe
- E: Verlegeebene
- O: Oberseite
- V: Verbindungsebene
- f: Fügebewegung
- q: Querrichtung
- s: Symmetrieachse
- ß1: erster Winkel
- ß2: zweiter Winkel
- ß3: dritter Winkel
- ß4: vierter Winkel
- v₁: erste Verriegelungsbewegung
- v₂: zweite Verriegelungsbewegung

## Patentansprüche

1. Verriegelungssystem (1) mit einem einen ersten Federabschnitt (12.1) und einen ersten Fußabschnitt (13.1) aufweisenden profilartigen Sperrelement (11) und einem zwei größere Seitenflächen (2) und Ränder (3) aufweisenden plattenförmigen Paneel (4.1, 4.2), das jeweils zur Verbindung gleichartiger Paneele zu einem Fußboden-, Wand- oder Deckenbelag wenigstens an zwei sich gegenüberliegenden Rändern (3) mit zueinander komplementären Hakenprofilen (5.1, 5.2), einem ersten Hakenprofil (5.1) und einem zweiten Hakenprofil (5.2), mit jeweils einem einen Hakenvorsprung (7.2) und eine in einer senkrecht zu den größeren Seitenflächen (2) und zu einer Längsrichtung der gegenüberliegenden Rändern (3) in Querrichtung (q) wirksame erste Hinterschneidung (9.1) aufweisenden Hakenelement (6) versehen ist, wobei die Hakenelemente (6) komplementärer Hakenprofile (5.1, 5.2) zweier benachbarter Paneele (4.1, 4.2) in einer Fügebewegung (f) mit zumindest einer Komponente senkrecht zur größeren Seitenfläche (2) jeweils unter Eingriff ihres Hakenvorsprungs (7.2) in die erste Hinterschneidung (9.1) des jeweils anderen Hakenelementes (6) in eine Verbindungsposition hinein eingreifend verhaken, das Sperrelement (11) in der ersten Hinterschneidung (9.1) des ersten Hakenprofils (5.1) eingelegt ist, die erste Hinterschneidung (9.1) zumindest des ersten Hakenprofils (5.1) eine senkrecht zu den größeren Seitenflächen (2) wirksame zweite Hinterschneidung (9.2) aufweist, das Sperrelement (11) mit Erreichen der Verbindungsposition der beiden Paneelen (4.1, 4.2) mit seinem ersten Federabschnitt (12.1) in einer Verriegelungsbewegung (v₁) automatisch aus einer Offenposition in eine senkrecht zu den größeren Seitenflächen (2) wirksame, in Verbindungsposition der beiden Paneelen (4.1, 4.2) der zweiten Hinterschneidung (9.2) des ersten Hakenprofils (5.1) gegenüber liegende dritte Hinterschneidung (9.3) des Hakenelementes (6) des zweiten Hakenprofils (5.2) unter formschlüssiger Verriegelung der beiden Hakenprofile (5.1, 5.2) senkrecht zu den größeren Seitenflächen (2) in eine Verriegelungsposition hinein eingreift, sich das Sperrelement (11) mit dem ersten Fußabschnitt (13.1) in der ersten Hinterschneidung (9.1) abstützt und die zweite Hinterschneidung (9.2) einen von dem Sperrelement (11) in der Verriegelungsposition und dem ersten Hakenprofil (5.1) begrenzten Raum (14) aufweist, in dem oder in den hinein das Sperrelement (11) mit seinem ersten Federabschnitt (12.1) in die Offenposition hinein elastisch auslenkbar ist, wobei das Sperrelement (11) in Anschluss an den ersten Fußabschnitt (13.1) einen zu demselben abgewinkelten und zum ersten Federabschnitt (12.1) in Querrichtung (q) beabstandeten Abschnitt (19) aufweist, der in der Verriegelungsposition bezüglich der Querrichtung (q) formschlüssig zwischen den Hakenvorsprüngen (7.2) der beiden Hakenprofile (5.1, 5.2) angeordnet ist, **dadurch gekennzeichnet, dass** der erste Fußabschnitt so dem Nutgrund angepasst ist, dass er mit einer Anlagefläche flächig vorzugsweise über den gesamten Nutgrund anliegt.

2. Verriegelungssystem (1) nach Anspruch 1, **dadurch gekennzeichnet, dass** das Sperrelement (11) in einer Einlegeposition in die erste Hinterschneidung (9.1) den Raum (14) allein mit seinem ersten Federabschnitt (12.1) begrenzt und während der Fügebewegung (f) unter Abgleitung an einer ersten Schräge (10.1) des Hakenelementes (6) des zweiten Hakenprofils (5.2) in den Raum (14) hinein federelastisch in die Offenposition hinein auslenkbar ist.

3. Verriegelungssystem (1) nach Anspruch 1 oder 2, **dadurch gekennzeichnet, dass** die Hakenprofile (5.1, 5.2) jeweils eine die erste Hinterschneidung (9.1) und die zweite Hinterschneidung (9.2) enthaltende nutenartige Ausnehmung (8) mit Nutgrund (16.1) und Nutseitenwänden (16.2, 16.3), einer den Raum (14) begrenzenden ersten Nutseitenwand (16.2) und einer die erste Hinterschneidung (9.1) begrenzende zweite Nutseitenwand (16.3), aufweisen, wobei sich das Sperrelement (11) mit dem ersten Fußabschnitt (13.1) an dem Nutgrund (16.1) und den Nutseitenwänden (16.2, 16.3) abstützt.

4. Verriegelungssystem (1) nach Anspruch 3, **dadurch gekennzeichnet, dass** sich der erste Fußabschnitt (13.1) mit einer dem Nutgrund (16.1) angepassten Anlagefläche abstützt.

5. Verriegelungssystem (1) nach Anspruch 4, **dadurch gekennzeichnet, dass** der Nutgrund (16.1) zumindest in etwa parallel zu den größeren Seitenflächen (2) verläuft und der erste Fußabschnitt (13.1) in einem ersten Winkel (ß1) größer 90° zum ersten Federabschnitt (12.1) abgewinkelt ist.

6. Verriegelungssystem (1) nach Anspruch 5, **dadurch gekennzeichnet, dass** sich der Nutgrund (16.1) in Querrichtung (q) bis zur dritten Hinterschneidung (9.3) hin erstreckt und die erste Nutseitenwand (16.2) und der Nutgrund (16.1) einen zweiten Winkel (ß2) einschließen, der größer als der erste Winkel (ß1) zwischen erstem Fußabschnitt (13.1) und erstem Federabschnitt (12.1) des Sperrelementes (11) ist.

7. Verriegelungssystem (1) nach einem der Ansprüche 1 bis 6, **dadurch gekennzeichnet, dass** das Sperrelement (11) in Anpassung an die beiden Hakenprofile (5.1, 5.2) eine kantige S-Profilform mit mittig angeordnetem Abschnitt (19) und mit einem zweiten Fußabschnitt (13.2) in Verbindung des Abschnittes (19) mit dem zweiten Federabschnitt (12.2) aufweist.

8. Verriegelungssystem (1) nach einem der Ansprüche 1 bis 7, **dadurch gekennzeichnet, dass** der erste Federabschnitt (12.1) und/oder der zweite Federabschnitt (12.2) jeweils ein hakenartiges freies Ende (29) aufweisen, mit dem das Sperrelement (11) in Verriegelungsposition zur formschlüssigen Verbindung der Paneelen (4.1, 4.2) in der jeweils zugeordneten zweiten und dritten Hinterschneidung (9.2, 9.3) formschlüssig anliegt.

9. Verriegelungssystem (1) nach einem der Ansprüche 1 bis 8, **dadurch gekennzeichnet, dass** das Sperrelement (11) einstückig und als extrudiertes Kunststoffbauteil ausgebildet ist.

10. Verriegelungssystem (1) nach einem der Ansprüche 1 bis 9, **dadurch gekennzeichnet, dass** das das erste Hakenprofil (5.1) aufweisende Paneel bezüglich der Verlegeebene (E) als unteres Paneel (4.1) mit seinem ersten Hakenprofil (5.1) das zweite Hakenprofil (5.2) des als oberes Paneel (4.2) angeordneten Paneels untergreift.

## Claims

1. A locking system (1) for being provided with a profile-like lock element (11) which has a first spring portion (12.1) and a first foot portion (13.1) and plate-shaped panels (4.1, 4.2) which each have two larger side surfaces (2) and edges (3) and which for the connection of similar panels to provide a floor, wall or ceiling covering are provided at least at two mutually opposite edges (3) with mutually complementary profiles (5.1, 5.2), a first hook profile (5.1) and a second hook profile (5.2), each with a hook element (6) which has a hook projection (7.2) and first undercut (9.1) operative in a transverse direction (q) perpendicular to the larger side surfaces (2) and to a longitudinal direction of the oppositely disposed edges (3), wherein the hook elements (6) of complementary hook profiles (5.1, 5.2) of two adjacent panels (4.1, 4.2) hook in engaging relationship into a connecting position in a joining movement (f) with at least one component perpendicularly to the larger side surface (2) with respective engagement of its hook projection (7.2) into the first undercut (9.1) of the respective other hook element (6), the lock element (11) can be inserted in the first undercut (9.1) of the first hook profile (5.1), the first undercut (9.1) at least of the first hook profile (5.1) has a second undercut (9.2) operative perpendicularly to the larger side surfaces (2), the lock element (11) with attainment of the connecting position of the two panels (4.1, 4.2) automatically engages with its first spring portion (12.1) in a locking movement (v₁) from an open position into a third undercut (9.3) of the hook element (6) of the second hook profile (5.2), said third undercut being operative perpendicularly to the larger side surfaces (2) and being in opposite relationship in the connecting position of the two panels (4.1, 4.2) to the second undercut (9.2) of the first hook profile (5.1), with positive locking of the two hook profiles (5.1, 5.2) perpendicularly to the larger side surfaces (2) into a locking position, the lock element (11) is supported with the first foot portion (13.1) in the first undercut (9.1) and the second undercut (9.2) has a space (14) which is delimited by the lock element (11) in the locking position and the first hook profile (5.1) and in which or into which the lock element (11) can be elastically deflected with its first spring portion (12.2) into the open position wherein the lock element (11) adjoining the first foot portion (13.1) has a portion (19) which is angled relative thereto and which is spaced relative to the first spring portion (12.1) in the transverse direction (q) and which is disposed in the locking position with respect to the transverse direction (q) in positively locking relationship between the hook projections (7.2) of the two hook profiles (5.1, 5.2), **characterized in that** the first foot portion is adapted to the groove bottom in a way that it has a plane contact with a contact surface, preferably over the entire groove bottom.

2. A locking system (1) as set forth in claim 1 **characterised in that** in an insertion position into the first undercut (9.1) the lock element (11) delimits the space (14) solely with its first spring portion (12.1) and can be resiliently deflected into the open position during the joining movement (f) with sliding movement against a first inclined portion (10.1) of the hook element (6) of the second hook profile (5.2) into the space (14).

3. A locking system (1) as set forth in claim 1 or claim 2 **characterised in that** the hook profiles (5.1, 5.2) respectively have a groove-like recess (8) which contains the first undercut (9.1) and the second undercut (9.2) and which has a groove bottom (16.1) and groove side walls (16.2, 16.3), a first groove side wall (16.2) delimiting the space (14) and a second groove side wall (16.3) delimiting the first undercut (9.1), wherein the lock element (11) is supported with the first foot portion (13.1) against the groove bottom (16.1) and the groove side walls (16.2, 16.3).

4. A locking system (1) as set forth in claim 3 **characterised in that** the first foot portion (13.1) is supported with a contact surface adapted to the groove bottom (16.1).

5. A locking system (1) as set forth in claim 4 **characterised in that** the groove bottom (16.1) extends at least approximately parallel to the larger side surfaces (2) and the first foot portion (13.1) is angled at a first angle (β1) greater than 90° to the first spring portion (12.1).

6. A locking system (1) as set forth in claim 5 **characterised in that** the groove bottom (16.1) extends in the transverse direction (q) to the third undercut (9.3) and the first groove side wall (16.2) and the groove bottom (16.1) include a second angle (β2) greater than the first angle (β1) between the first foot portion (13.1) and the first spring portion (12.1) of the lock element (11).

7. A locking system (1) as set forth in one of claims 1 to 6 **characterized in that** the lock element (11) in a configuration adapted to the two hook profiles (5.1, 5.2) is of an angular S-profile shape with a centrally arranged portion (19) and with a second foot portion (13.2) in connecting relationship of the portion (19) with the second spring portion (12.2).

8. A locking system (1) as set forth in one of claims 1 to 7 **characterized in that** the first spring portion (12.1) and/or the second spring portion (12.2) respectively have a hook-like free end (29) with which the lock element (11) is in positively locking contact in the locking position for positively lockingly connecting the panels (4.1, 4.2) in the respectively associated second and third undercuts (9.2, 9.3).

9. A locking system (1) as set forth in one of claims 1 to 8 **characterised in that** the lock element (11) is in one piece in the form of an extruded plastic component.

10. A locking system (1) as set forth in one of claims 1 to 9 **characterised in that** the panel having the first hook profile (5.1) engages in relation to the laying plane (E) as the underneath panel (4.1) with its first hook profile (5.1) under the second hook profile (5.2) of the panel disposed as the upper panel (5.2).

## Revendications

1. Système de verrouillage (1) muni d'un élément de blocage (11) en forme de profilé ayant une première section faisant ressort (12.1) et une première section formant pied (13.1) et d'un panneau en forme de plaque (4.1, 4.2) comportant deux grandes surfaces latérales (2) et des bords (3) et qui, en vue de l'assemblage de panneaux de même type pour obtenir un revêtement de sol, de mur ou de plafond, est respectivement muni au moins sur deux bords opposés (3) de profilés en crochet mutuellement complémentaires (5.1, 5.2), un premier profilé en crochet (5.1) et un second profilé en crochet (5.2), ayant chacun un élément formant crochet (6) présentant une saillie d'accrochage (7.2) et une première contre-dépouille (9.1) agissant dans un sens transversal (q) perpendiculaire aux grandes surfaces latérales (2) et à un sens longitudinal des bords (3) opposés, les éléments formant crochet (6) des profilés en crochet complémentaires (5.1, 5.2) de deux panneaux adjacents (4.1, 4.2) s'accrochant respectivement en entrant en prise l'un dans l'autre dans un mouvement d'assemblage (f) dans une position de liaison par au moins un composant perpendiculairement à la grande surface latérale (22) avec engagement respectif de sa saillie d'accrochage (7.2) dans la première contre-dépouille (9.1) du respectivement autre élément formant crochet (6), l'élément de blocage (11) étant inséré dans la première contre-dépouille (9.1) du premier profilé en crochet (5.1), la première contre-dépouille (9.1) d'au moins le premier profilé en crochet (5.1) ayant une deuxième contre-dépouille (9.2) agissant dans un sens perpendiculaire aux grandes surfaces latérales (2), l'élément de blocage (11) s'engageant, lors de l'atteinte de la position de liaison des deux panneaux (4.1, 4.2), automatiquement par sa première section faisant ressort (12.1) selon un mouvement de verrouillage (v₁) depuis une position ouverte, dans une troisième contre-dépouille (9.3) de l'élément formant crochet (6) du second profilé en crochet (5.2), ladite troisième contre-dépouille agissant perpendiculairement aux grandes surfaces latérales (2) et étant en relation opposée dans la position de liaison des deux panneaux (4.1, 4.2) par rapport à la deuxième contre-dépouille (9.2) du premier profilé en crochet (5.1), avec un verrouillage par engagement positif des deux profilés en crochet (5.1, 5.2) perpendiculairement aux grandes surfaces latérales (2) dans une position de verrouillage, l'élément de blocage (11) s'appuyant par la première section formant pied (13.1) dans la première contre-dépouille (9.1) et la deuxième contre-dépouille (9.2) présentant un espace (14) qui est délimité par l'élément de blocage (11) en position de verrouillage et par le premier profilé en crochet (5.1) et dans lequel l'élément de blocage (11) peut être dévié élastiquement dans la position ouverte avec sa première section faisant ressort (12.1), l'élément de blocage (11) qui fait suite à la première section formant pied (13.1) présentant une section (19) qui est coudée par rapport à celle-ci et espacée dans le sens transversal (q) par rapport à la première section faisant ressort (12.1) et qui est disposée en position de verrouillage par rapport au sens transversal (q) par engagement positif entre les saillies d'accrochage (7.2) des deux profilés en crochet (5.1, 5.2), **caractérisé en ce que** la première section formant pied est adaptée au fond de la rainure de telle sorte qu'elle porte par une surface d'appui de manière plane, de préférence sur l'ensemble du fond de la rainure.

2. Système de verrouillage (1) selon la revendication 1, **caractérisé en ce que** dans une position d'insertion dans la première contre-dépouille (9.1), l'élément de blocage (11) délimite l'espace (14) uniquement par sa première section faisant ressort (12.1) et peut, pendant le mouvement d'assemblage (f), être dévié élastiquement dans l'espace (14) vers la position ouverte par glissement contre un premier chanfrein (10.1) de l'élément formant crochet (6) du second profilé en crochet (5.2).

3. Système de verrouillage (1) selon la revendication 1 ou 2, **caractérisé en ce que** les profilés en crochet (5.1, 5.2) ont respectivement un évidement (8) en forme de rainure qui contient la première contre-dépouille (9.1) et la deuxième contre-dépouille (9.2) et qui a un fond de rainure (16.1) et des parois latérales de rainure (16.2, 16.3), une première paroi latérale de rainure (16.2) délimitant l'espace (14) et une seconde paroi latérale de rainure (16.3) délimitant la première contre-dépouille (9.1), l'élément de blocage (11) s'appuyant par la première section formant pied (13.1) contre le fond de la rainure (16.1) et les parois latérales de la rainure (16.2, 16.3).

4. Système de verrouillage (1) selon la revendication 3, **caractérisé en ce que** la première section formant pied (13.1) s'appuie au moyen d'une surface d'appui adaptée au fond de la rainure (16.1).

5. Système de verrouillage (1) selon la revendication 4, **caractérisé en ce que** le fond de la rainure (16.1) est au moins à peu près parallèle aux grandes surfaces latérales (2) et la première section formant pied (13.1) est coudée par rapport à la première section faisant ressort (12.1) selon un premier angle (ß1) supérieur à 90°.

6. Système de verrouillage (1) selon la revendication 5, **caractérisé en ce que** le fond de la rainure (16.1) s'étend dans le sens transversal (q) jusqu'à la troisième contre-dépouille (9.3) et la première paroi latérale de la rainure (16.2) et le fond de la rainure (16.1) forment un second angle (ß2), qui est plus grand que le premier angle (ß1) entre la première section formant pied (13.1) et la première section faisant ressort (12.1) de l'élément de blocage (11).

7. Système de verrouillage (1) selon l'une des revendications 1 à 6, **caractérisé en ce que** l'élément de blocage (11) est adapté aux deux profilés en crochet (5.1, 5.2) et a une forme anguleuse profilée en S avec une section disposée centralement (19) et avec une seconde section formant pied (13.2) en liaison de la section (19) avec la seconde section faisant ressort (12.2).

8. Système de verrouillage (1) selon l'une des revendications 1 à 7, **caractérisé en ce que** la première section faisant ressort (12.1) et/ou la seconde section faisant ressort (12.2) ont chacune une extrémité libre en forme de crochet (29) par laquelle l'élément de blocage (11) est en contact par engagement positif en position de verrouillage pour assembler par engagement positif les panneaux (4.1, 4.2) dans les deuxième et troisième contre-dépouilles (9.2, 9.3) respectivement associées.

9. Système de verrouillage (1) selon l'une des revendications 1 à 8, **caractérisé en ce que** l'élément de blocage (11) est d'un seul tenant et réalisé en tant que composant en plastique extrudé.

10. Système de verrouillage (1) selon l'une des revendications 1 à 9, **caractérisé en ce que** le panneau comportant le premier profilé en crochet (5.1), considéré en tant que panneau inférieur (4.1) par rapport au plan de pose (E), s'engage avec son premier profilé en crochet (5.1) sous le second profilé en crochet (5.2) du panneau disposé en tant que panneau supérieur (4.2).
